**Europäisches Patentamt**

(19) **European Patent Office**

**Office européen des brevets**

(11) Numéro de publication: **0 204 620**
**B1**

(12) **FASCICULE DE BREVET EUROPEEN**

(45) Date de publication du fascicule du brevet:
08.11.89

(51) Int. Cl.⁴: **G 06 K 13/08**

(21) Numéro de dépôt: **86401142.4**

(22) Date de dépôt: **29.05.86**

(54) **Guichet à volet mobile pour dispositifs à cartes.**

(30) Priorité: **04.06.85 FR 8508527**

(43) Date de publication de la demande:
**10.12.86 Bulletin 86/50**

(45) Mention de la délivrance du brevet:
**08.11.89 Bulletin 89/45**

(84) Etats contractants désignés:
**CH DE FR IT LI SE**

(56) Documents cités:
**EP-A- 0 063 689**
**DE-A- 3 309 890**
**US-A- 3 866 827**

(73) Titulaire: **CROUZET, 128, Avenue de la République,**
**F-75011 Paris (FR)**

(72) Inventeur: **Meriau, Claude-Marcel, 25, rue Jules**
**Védrines, F-26027 Valence Cédex Drôme (FR)**
Inventeur: **Goujon, Rémy, 25, rue Jules Védrines,**
**F-26027 Valence Cédex Drôme (FR)**

(74) Mandataire: **Bloch, Robert et al, 2, square de l'Avenue**
**du Bois, F-75116 Paris (FR)**

## Description

La présente invention a pour objet un guichet du type à volet mobile, pourvu d'une fente destinée à l'introduction d'une carte vers des moyens connecteurs pour assurer la liaison électrique entre l'électronique incluse dans la carte et des circuits externes de gestion, et comprenant des moyens mécaniques pour déplacer la carte en translation pendant le déplacement du volet.

Un tel dispositif s'applique à la réalisation d'appareils à cartes de paiement électronique, comme les téléphones publics, par exemple.

On connaît déjà un tel dispositif, par la demande allemande publiée sous le numéro 3 309 890. Dans ce dispositif, il est prévu des moyens électromécaniques pour appuyer les contacts assurant la liaison avec les circuits externes de gestion, après le déplacement en translation de la carte.

On connaît également un autre dispositif de ce type, par la demande européenne publiée sous le numéro 0 063 689. Dans ce dispositif, il est prévu des moyens purement mécaniques, actionnés par le déplacement du volet, pour appuyer les contacts assurant la liaison avec les circuits externes de gestion, après le déplacement en translation de la carte.

Les dispositif précédents ont pour inconvénient, outre le fait que la réalisation de contacts mobiles et de moyens pour actionner ces contacts augmente leur prix de revient, une fiabilité réduite, précisément à cause de la complexité de leur conception.

La présente invention vise à pallier ces inconvénients en procurant un dispositif dans lequel la liaison électrique entre l'électronique incluse dans la carte et les circuits externes de gestion est assurée par des contacts d'un type conventionnel, donc de conception simple et de fiabilité élevée.

A cet effet, elle a pour objet un dispositif du type défini ci-dessus, caractérisé par le fait que lesdits moyens mécaniques agissent sur lesdits moyens connecteurs solidaires de la carte de manière à déplacer l'ensemble en translation sensiblement perpendiculairement au volet pendant son déplacement.

Dans le dispositif de l'invention, l'utilisateur, dans un premier temps, réalise la connexion entre la carte et les circuits de gestion, au moment où il enfonce la carte dans la fente d'introduction et, dans un deuxième temps, provoque, en déplaçant le volet, le déplacement de l'ensemble des moyens connecteurs et de la carte.

Avantageusement, le déplacement du volet est un pivotement autour d'un axe.

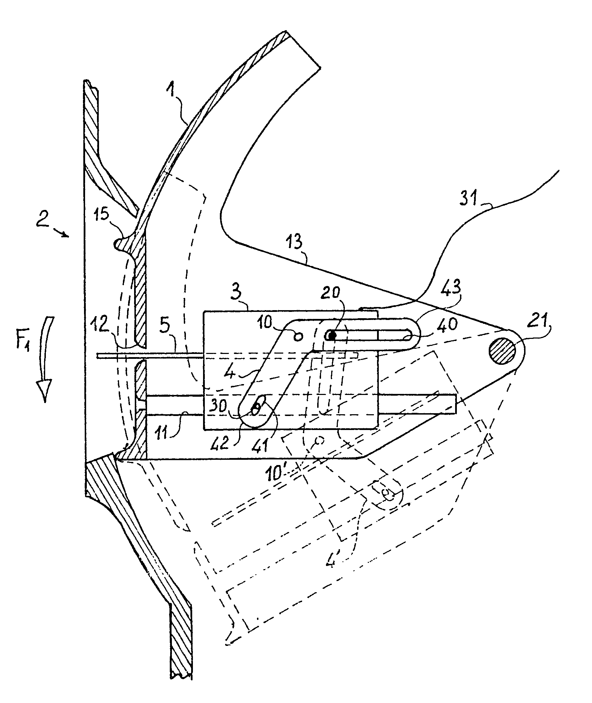

Le dessin annexé illustre, à titre d'exemple, un mode de réalisation du dispositif conforme à la présente invention.

Le dispositif comprend un volet mobile 1, articulé autour d'un axe horizontal 21. Deux flasques 13 assurent la liaison entre ce point de pivotement et la face avant du volet accessible au public au travers d'un guichet 2.

Une fente 12, dont les dimensions sont légèrement supérieures à l'épaisseur et à la largeur des cartes utilisées, permet d'introduire ces cartes dans un boîtier 3 à l'intérieur duquel, elles coopèrent de façon connue avec des contacts électriques reliés à des conducteurs électriques 31 assurant la liaison aux moyens de gestion de l'appareil.

Le boîtier 3 peut se déplacer en translation le long d'une tige 11 solidaire du volet mobile 1. Deux leviers identiques 4 sont disposés symétriquement de part et d'autre du boîtier. Chacun de ces leviers peut pivoter autour d'un axe 10 fixé sur chacun des flasques 13.

Tel que représenté, un seul levier est visible sans que cela nuise à la compréhension du dispositif qui peut indifféremment fonctionner avec un ou deux leviers symétriques.

Pour chaque levier, l'extrémité 42 est liée au boîtier 3, au moyen d'une lumière 41 et d'un pivot 30 solidaire du boîtier tandis que l'extrémité opposée 43 réagit sur un point fixe 20 par l'intermédiaire d'une seconde lumière oblongue 40.

Après introduction partielle d'une carte 5, dans la fente 12, jusqu'à ce qu'elle vienne en butée au fond du boîtier 3, l'usager doit abaisser le volet 1, dans le sens de la flèche F1 à l'aide d'une prise 15. Le pivot 10 arrive en position 10' selon un arc de cercle centré autour de l'axe 21. Le point 20 étant fixe, le levier 4, du fait de la lumière oblongue 40, bascule dans la position 4' ce qui se traduit également par une rotation autour de l'axe 10. Cette rotation a pour effet de faire glisser le boîtier 3, le long de la tige 11, qui entraîne dans son mouvement la carte toute entière au travers de la fente 12. Un contact électrique du type fin de course, non représenté, permet de ne déclencher le processus de traitement des informations que lorsque le volet a bien été pivoté à fond. A noter que la lumière 41 doit permettre un certain jeu à cause de la variation de distance entre les pivots 10 et 30 au cours du déplacement relatif du levier 4 et du boîtier 3.

Ce dispositif qui entraîne la carte au delà de la fente d'introduction empêche les fraudes et se prête particulièrement bien à la réalisation de guichets pour appareils utilisant des cartes à mémoire tels que des téléphones publics à paiement électronique.

## Revendications

1. Guichet du type à volet (1) mobile, pourvu d'une fente (12) destinée à l'introduction d'une carte (5) vers des moyens connecteurs (3) pour assurer la liaison électrique entre l'électronique incluse dans la carte et des circuits externes de gestion, et comprenant des moyens mécaniques (4) pour déplacer la carte en translation pendant le déplacement du volet, caractérisé par le fait que lesdits moyens mécaniques (4) agissent sur lesdits moyens connecteurs (3), ces derniers étant solidaires de la carte (5) lors de ladite introduction, de manière à déplacer l'ensemble connecteur-carte en translation sensiblement perpendiculairement au volet (1) pendant son déplacement.

2. Guichet selon la revendication 1, dans lequel ledit déplacement du volet (1) est un pivotement autour d'un axe (21).

3. Guichet selon l'une des revendications 1 ou 2, caractérisé par le fait que les moyens connecteurs consistent en un boîtier (3), pouvant se déplacer en translation le long d'une tige (11), solidaire du volet mobile (1), et les moyens mécaniques, agissant sur ledit boîtier, consistent en deux leviers identiques (4), disposés symétriquement de part et d'autre du boîtier, chacun desdits leviers pouvant pivoter autour d'un axe (10) solidaire du volet (1), tandis que ses extrémités sont reliées d'une part au boîtier (3), au moyen d'une lumière (41) et d'un tenon (30), et d'autre part, à un point fixe (20), au moyen d'une seconde lumière oblongue (40).

## Patentansprüche

1. Kassiervorrichtung mit bewegbarer Verschlußklappe (1), mit einem Schlitz (12) zum Einführen einer Karte (5) in Richtung auf Verbindungsmittel (3), um die elektrische Verbindung zwischen der in der Karte eingeschlossenen Elektronik und äußeren Steuerungskreisen zu gewährleisten, und mit mechanischen Mitteln (4), um die Karte während der Bewegung der Verschlußklappe translatorisch zu verschieben, dadurch gekennzeichnet, daß die genannten mechanischen Mittel (4) auf die genannten Verbindungsmittel (3) wirken, wobei letztere während des Einführens mit der Karte (5) verbunden sind, so daß die Einheit Verbindungsmittel-Karte während der Bewegung der Verschlußklappe (1) translatorisch und ungefähr senkrecht zu dieser verschoben wird.

2. Kassiervorrichtung gemäß Anspruch 1, bei welcher die genannte Bewegung der Verschlußklappe (1) in einer Drehung um eine Achse (21) besteht.

3. Kassiervorrichtung gemäß einem der Ansprüche 1 oder 2, dadurch gekennzeichnet, daß die Verbindungsmittel aus einem Gehäuse (3) bestehen, welches translatorisch entlang eines Stiftes (11) verschoben werden kann, der mit der bewegbaren Verschlußklappe (1) verbunden ist und die mechanischen Mittel, welche auf das genannte Gehäuse wirken, aus zwei identischen Hebeln (4) bestehen, die symmetrisch zu beiden Seiten des Gehäuses angeordnet sind, wobei sich jeder der genannten Hebel um eine mit der Verschlußklappe (1) verbundene Achse (10) drehen kann, während seine Enden einerseits mit dem Gehäuse (3) mittels eines Langloches (41) und eines Zapfens (30) verbunden sind und andererseits, an einem Fixpunkt (20), mittels eines zweiten Langloches.

## Claims

1. Wicket of the mobile shutter (1) type, having a slit (12) for the introduction of a card (5) towards connector means (3) ensuring the electric connection between the electronics included in the card and external control circuits, and comprising mechanical means (4) for moving the card in translation during the movement of the shutter, characterized by the fact that said mechanical means (4) act on said connector means (3), these latter being integral with the card (5) during said introduction so as to move the assembly connector-card in translation approximately perpendicular to the shutter (1) during its movement.

2. The wicket as claimed in claim 1, wherein said movement of the shutter (1) is a pivoting movement about an axis (21).

3. The wicket according to one of claims 1 or 2, characterized by the fact that the connector means consist of a case (3) able to move in translation along a rod (11) integral with the movable shutter (1) and the mechanical means, acting on said case, consist of two identical levers (4) disposed symmetrically on each side of the case, each of said levers being mounted for pivoting about a pin (10) integral with the shutter (1) whereas its ends are connected on the one hand to the case (3), by means of an aperture (41) and a tenon (30) and, on the other hand, to a fixed point (20) by means of a second oblong aperture (40).